(19) Europäisches Patentamt
European Patent Office
Office européen des brevets

(11) **EP 3 872 478 A1**

(12) **EUROPEAN PATENT APPLICATION**

(43) Date of publication:
**01.09.2021 Bulletin 2021/35**

(51) Int Cl.:
**G01N 21/47** (2006.01)          **G01N 21/45** (2006.01)
**G01N 21/77** (2006.01)

(21) Application number: **20159971.9**

(22) Date of filing: **28.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ETH Zurich**
**8092 Zurich (CH)**

(72) Inventors:
- VÖRÖS, Janos
  8050 Zurich (CH)
- REICHMUTH, Andreas
  8037 Zürich (CH)
- BLICKENSTORFER, Yves
  8800 Thalwil (CH)
- FRUTIGER, Andreas
  8048 Zürich (CH)
- KÜBRICH, Katharina
  36154 Hainzell (DE)

(54) **DIFFRACTOMETRIC SENSING DEVICE**

(57)     A diffractometric sensing device for analyzing molecular interactions is described, the diffractometric sensing device comprising a transparent carrier medium, the carrier medium comprising a grating structure (42.1-42.5) with a plurality of consecutive surfaces or lines a plurality of binding sites arranged thereon, the binding sites being configured to interact with one or more target molecules, wherein the grating structure is configured to diffract a portion of coherent light propagating in the carrier medium so as to produce a constructive interference signal at a light detector (4.1- 4.4), the signal being dependent on molecular interactions at or in the vicinity of the binding sites. The invention offers more sensitivity, faster response, miniaturization, easy manufacturing and more applications compared to current diffractometric sensing devices.

**Figure 7**

**Description**

**FIELD OF THE INVENTION**

The present invention relates to a diffractometric sensing device for analyzing molecular interactions.

**BACKGROUND OF THE INVENTION**

When studying biological interactions at the molecular level, measurement techniques that can selectively probe the molecular interactions, for example association/dissociation rate and strength of binding events and the like, play an important role. Further, it is desired to characterize said interactions non-invasively and in real time in order to obtain kinetic information of the processes involved.

Refractometric optical biosensors such as surface plasmon resonance represent one of the non-invasive measuring techniques with the possibility of label-free detection of molecular interactions. The refractometric optical biosensors measure the resonance shift or the phase shift of a surface wave, where one of the interaction partners, for example a binding site (of a binder) for a target molecule, is immobilized in a thin layer on the sensor surface in order to enable label-free detection. The surface wave propagating along the thin layer is subjected to a phase retardation that represents the concentration of target molecules at the immobilized binding sites. However, refractometric optical biosensors usually suffer from comparatively low selectivity since all refractive index changes, e.g. caused by non-specific binding or by temperature effects, contribute to the detected phase signal. Therefore, referencing-schemes, for example including measuring the thin layer without binding sites, are typically applied in order to compensate the non-specific bindings.

An alternative approach is represented by diffractometric optical biosensors based on the principle of a wavefront-splitting interferometer using a diffraction grating, where the intensity of light diffracted at the sensor surface is measured allowing label-free analysis of biomolecular interactions. Diffractometric optical biosensors have the advantage that the background signal in the absence of target molecules is weak, such that bulk effects and effects of non-specific binding events are small. However, conventional diffractometric optical biosensors typically struggle with a reduced sensitivity.

More recently, focal molography has been presented as a diffractometric optical biosensor with increased sensitivity where signal amplification through the coherent addition of the phase signals from coherently assembled molecules in a so-called mologram is provided by focusing of the phase signal from the coherently ordered molecules into a diffraction-limited focal spot. The method of focal molography is for example described in the publication of C. Fattinger, Phys. Rev. X 4, 031024 (2014) or in V. Gatterdam et. al., Nature Nanotechnology 12, 1089-1095 (2017). A surface grating on a planar thin-film optical waveguide is provided where the investigated molecules immobilize along the lines of the grating that forms a diffractive lens on the surface of the thin-film waveguide. A diverging laser beam is coupled to the transverse electric mode of the waveguide by an input coupler. While propagating through the mologram, the guided mode partially decouples from the waveguide through diffraction at the molecules in the mologram, interfering constructively in a focal spot. The properties of the light in the focus of the mologram are used for distinct detection of refractive-index contrast in the proximity of the coherently assembled recognition sites from which information on the interaction of the recognition sites with molecules in a liquid or gaseous sample is obtained. The noncoherent surroundings of the coherently assembled biomolecules consisting of freely diffusing solvent and solute or randomly adsorbing molecules (e.g., ions, detergents, plasma proteins, enzymes, cofactors, chaperons, ligand molecules) as well as changes in temperature do not contribute to the coherent signal in the focus of the mologram.

While applying two-dimensional (2D) focal molography as described above, it has turned out that it would be desirable to increase the limited amount of binding sites in the mologram and to reduce the response time at small concentrations which may be long due to slow diffusion of the target molecules. Further, it would be desirable to provide a true three-dimensional (3D) environment for biological processes while performing the diffractometric readout. Overall, it is desirable to further increase the signal to noise ratio in order to optimize the resolution of the optical biosensor. In addition, it is desirable to miniaturize diffractometric sensor devices for many applications and to provide practical ways for multiplexing.

Finally, the field of in-vitro diagnostics relies heavily on disease biomarkers. Traditionally their concentration in biological samples is used in a hypothesis-driven, correlative manner to determine the health status of an individual. This approach has two drawbacks. First, biomarkers need to be identified and second they need to be measurable at the required concentration. Since diffractometric sensors are inherently unaffected by non-coherent processes they also open up novel, disruptive ways of performing biomarker free in-vitro diagnostics.

**SUMMARY OF THE INVENTION**

It is therefore an object of the present invention to provide a diffractometric sensing device for analyzing biomolecular interactions which improves the prior art and avoids at least part of the disadvantages of the prior art.

According to the present invention, this object is achieved by the features of the independent claims. In addition, further advantageous embodiments follow from the dependent claims, claim combinations and the description as well as the figures.

According to an aspect of the invention, this object is particularly achieved by a diffractometric sensing device analyzing biomolecular interactions, comprising a three-dimensional transparent carrier medium, the carrier medium being permeable to the one or more target molecules and comprising a grating structure with a plurality of consecutive surfaces and a plurality of binding sites arranged thereon, the binding sites being configured to bind the one or more target molecules, wherein the grating structure is configured to diffract a portion of coherent light propagating in the carrier medium so as to produce a constructive interference signal at a light detector, the signal being dependent on molecular interactions at or in the vicinity of the binding sites The carrier medium acts as a support structure for the patterned recognition sites. The three-dimensional arrangement with two-dimensional surfaces on which a plurality of binding sites is arranged and thus target molecules may be immobilized on, has the advantage that the amount of binding sites can largely be increased. Compared to two-dimensional arrangements, the issue of long response times due to slow diffusion of the target molecules can be mitigated by the three-dimensional arrangement. Furthermore, a true three-dimensional environment resembling the real environment of biological processes can be provided for probing.

Preferably, the carrier medium exhibits a stiffness which is sufficientto maintain the coherence of the synthetic hologram of binding sites with respect to the light propagating through the carrier medium and being diffracted at the grating structure with the binding sites arranged thereon.

Such binding sites refer to any reactive or binding species that are arranged in a coherent structure. For example, they can refer to an active region of a binder, such as a specific amino acid on a poly-peptide or nucleotide sequence on a polynucleotide, that participate in a specific binding event with the one or more (target) molecule. Thus, the term "binder" refers to a molecule that may bind through one or more reactive regions to one or more target molecules in a biological sample. A binder may either be a high affinity binder or a low affinity binder. Suitable binders may include one or more of natural or modified amino acids, natural or modified peptides, proteins (e.g., antibodies), polysaccharides (e.g., lectins, sugars), lipids, enzymes, enzyme substrates or inhibitors, ligands, receptors, antigens, or haptens. A suitable binder may be selected depending on the sample to be analyzed and the targets available for detection. A binder or one or more binders of different nature may be arranged in a binder array, by tethering it to a surface or a carrier medium. To enable arrangement in in a grating structure, reactive sites are created in the shape of the grating structure. These reactive sites are also referred to as binding sites in this document.

The term biomolecular interaction refers to any interaction between biomolecules. They can refer to "binding event" or "binding" which is an association between a minimum of two molecular structures (i.e. reactive regions) or unbinding which is a dissociation between a minimum of two molecular structures, namely a binding site and a target molecule present in a biological sample. In this document we will use the terms "binding" and "binding event" for any biomolecular interaction and "binder" for any interaction partner. As used herein, a "biological sample" refers to any sample including one or more biological substances as potential target molecules. Such biological samples include but are not limited to blood (including whole blood, leukocytes prepared by lysis of red blood cells, peripheral blood mononuclear cells, plasma and serum), body fluids (such as sputum, urine, semen, cerebrospinal fluid, bronchial aspirate, sweat, feces, synovial fluid), cells, whole or manipulated tissue, and environmental samples (including any sample containing material from the natural environment, such as soil, liquid or water sediment or atmospheric dust or particulate). The interaction can be of structural or energetic nature and is mediated through one or more specific binding sites on each of the two interacting molecular structures. Typical examples of interaction events between a binder and a target molecule include binding or unbinding of, but are not limited to, ligand/receptor, anti-gen/antibody, enzyme/substrate, DNA/DNA, DNA/RNA, RNA/RNA, nucleic acid mismatches, complementary nucleic acids, nucleic acid/proteins and the like.

Throughout the present description and depending on the context as understood by the person skilled in the art, the terms "grating structure", "grating structure with target molecules", "coherent assembly", "mologram", "coherent pattern" shall equally be used to designate the structure with the target molecules configured to coherently scatter incoming coherent light so as to generate a diffracted portion of the light which is used to probe the binding event of the target molecules.

The grating structure of the diffractometric sensing device according to the present invention may be functionalized such that an affinity tag recognizes a binder structure on a transmembrane (i.e. a GPCR (G-protein coupled receptor)) or an artificial transmembrane receptor on a living cell, cellular component or vesicles containing these receptors in the sample. The grating structure is effectively translated by lateral diffusion of transmembrane or artificial transmembrane receptors in the membrane of the vesicle, cellular compartment or living cell and any interaction between the transmembrane or artificial transmembrane protein can be measured intracellularly in a label-free manner.

In an embodiment, the surfaces of the grating structure are curved surfaces configured to focus the diffracted portion of the coherent light into a diffraction limited focal spot at the detector.

In particular, the diffracted portion of the coherent light may constructively interfere at the diffraction limited focal spot, with specific binding of the target molecules at the binding sites enhancing the coherent scattering of the incoming coherent light passing the grating structure and interacting with the target molecules bound thereon. The binding event can be characterized for example by exploiting that the spot intensity at the detector is power-dependent (quadratically) on the mass bound to the grating structure. By tracking the spot intensity over time, real-time monitoring of the binding events can be performed. Nonspecific binding, on the other hand, does not or only weakly contribute to the measured signal in the detector.

In particular, the curved surfaces (in orthogonal or cartesian coordinates $x_j$, $y_j$, $z_j$) of the grating structure focusing a plane wave of the incoming coherent light are paraboloids of revolution and may be described by the equation

$$z_j = ax_j^2 + ay_j^2 - \frac{1}{4a}$$

wherein

$$a = \frac{n}{2j\lambda}$$

$\lambda$ being the wavelength of the coherent light, j an integer and $n$ the refractive index of the carrier medium. The coordinate system has been chosen such that the focal spot is at the origin and that the symmetry axes of the paraboloids of revolution coincide with the z-axis of the coordinate system. The incident plane wave has a k-wavevector in negative z-direction.

In an embodiment, the surfaces are described by spheroids or ellipsoids of revolution configured to focus a spherical wave of the incoming coherent light at the diffraction limited focal spot at the detector, wherein the ellipsoids exhibit the first focus at a source of the incoming coherent light and the second focus at the focal spot at the detector. The ellipsoids are designed to enable constructive interference at the focus.

$$\frac{x_j^2 + y_j^2}{b^2} + \frac{z_j^2}{a^2} = 1$$

with

$$a^2 = \frac{d^2}{4} + \frac{\lambda}{n}j + \left(\frac{\lambda}{2n}j\right)^2$$

and

$$b^2 = +\frac{\lambda}{n}j + \left(\frac{\lambda}{2n}j\right)^2$$

In an embodiment, the surfaces of the grating structure are planar surfaces in 3D, arranged parallel to each other, similar to crystal planes in ordinary crystals. The distance between the surfaces can be described by the well-known Bragg condition: $$d = \frac{j\lambda}{2n\sin\theta},$$ wherein n is the refractive index, j is an integer and $\theta$ is the angle between the incoming beam and diffracted beams relative to the surface plane.

The parallel, planar surfaces of the grating structure are arranged to diffract an incoming plane wave of the coherent light into a predetermined direction. The diffractometric sensing device may comprise a lens arranged between the grating structure and the detector configured to perform near-field to far-field transformation.

In an embodiment, the diffractometric sensing device comprises a source of the coherent light with a tunable wavelength of the coherent light. This has the advantage that the sensor can always operate at the Bragg condition. It enables that temporal fluctuations of the refractive index can be adjusted for.

Preferably, the source and/or the propagation direction of the incoming coherent light, the grating structure and the detector are arranged such that probing of the target molecules bound to the grating structure is performable by dark field illumination to avoid background light.

In an embodiment, the surfaces of the grating structure are lithographically patterned into the carrier medium, preferably by interference lithography or multiphoton lithography.

By using the nonlinear processes in multiphoton lithography or interference lithography, it is preferably possible to obtain prepatterned surfaces of the grating structure on the nm scale. This localization of the binding site to the center of the constructively interfering region increases the signal per bound analyte (compare A. Frutiger et al., "Image reversal reactive immersion lithography improves the detection limit of focal molography", Opt. Lett. 43, 5801-5804, 2018). In interference lithography the nonlinear activation function of a photoprotective group such as for instance o-Nitrobenzyl (N. Kretschy, A.-K. Holik, V. Somoza, K.-P. Stengele, and M. M. Somoza, "Next-Generation o-Nitrobenzyl Photolabile Groups for Light-Directed Chemistry and Microarray Synthesis." Angew. Chem. Int. Ed Engl. 54, 8555-8559 (2015)) and image reversal can achieve this (A. Frutiger, Y. Blickenstorfer, S. Bischof, C. Forro, M. Lauer, V. Gatterdam, C. Fattinger, and J. Vörös, "Principles for Sensitive and Robust Biomolecular Interaction Analysis: The Limits of Detection and Resolution of Diffraction-Limited Focal Molography", Phys. Rev. Applied 11, 014056 (2019); DOI: 10.1103/PhysRevApplied.11.014056).

The carrier medium for the immobilization of recognition sites may be a commercially available medium or a synthetically made medium. In an embodiment, the carrier medium comprises a hydrogel. Typically, a hydrogel may comprise a polymeric material which can include a crosslinked macromolecular network, which exhibits the ability to swell in water and to retain a significant portion of water within its structure without dissolving. The mesh size of the hydrogel may be tuned to act as a filter to only allow molecules below a certain size to diffuse to the binding sites. In addition, the chemical properties of the hydrogel chains as well as the mesh size may be tuned such that it exhibits negligible volumetric expansion and/or shrinkage under changes in ionic strength or temperature to maintain the coherence with respect to the incident coherent light.

In another embodiment, the carrier medium comprises a mesoporous material. Typically, a mesoporous material includes any material having fine pores, e.g. silica or alumina based materials, and may have ordered or non-ordered mesostructures, preferably ordered, which refers to the voids between the atoms being arranged in an ordered manner. Preferably the pores form a continuous network through the carrier medium and exhibit dimensions smaller than the wavelength of light (< 50 nm). The materials refractive index may be engineered to resemble closely the one of water (e.g. CYTOP or similar materials). For sensing in aqueous environments the surface is ideally hydrophilic to allow for the pores to be filled by the sample.

In another embodiment, the carrier medium comprises a material with directional pores - i.e. hexagonal structures in anodized alumina or an array of pulled glass capillaries that allow fluids to be pumped through the carrier medium passively or actively. A fluid can be any medium that contains the analyte of interest.

In another embodiment, the carrier medium is composed of DNA origami. Typically, DNA origami may be a DNA nanostructure created from one or more or a plurality of DNA strands. The term "origami" infers that one or more strands or building blocks of DNA may be folded or otherwise positioned into a desired structure or shape. For example, a nucleic acid origami structure is either created from a scaffold strand of a nucleic acid, such as DNA, which is arranged into a desired macromolecular object of a custom shape, or is constructed by single stranded nucleic acid sequences which self-assemble into tiles to form lattices of any desired shape or size. Methods of making DNA origami are known to those of skill in the art. The self-assembling can be used to pattern the carrier medium with the desired coherent arrangement.

The target molecules may be injected into the carrier medium, such as the hydrogel, which may be configured to soak up the target molecules passively by capillary forces.

For some aspects of the inventions the carrier medium is a 2D (two-dimensional) non fouling adlayer which can be used to cover surfaces.

Instead of coherently patterning the entire illuminated volume with a carrier medium, a reasonable dark field illumination can be employed to minimize scattering from any non-patterned volume. According to one aspect of the invention such a dark field illumination may comprise one or more, preferably single-mode, waveguides configured to confine coherent light with a wavelength $\lambda$ in two transverse directions with respect to the propagation direction of the coherent light in the waveguide, wherein the grating structure with the plurality of surfaces is arranged within the waveguide or its evanescent field and forms a distributed Bragg reflector with periodicity $\Lambda \approx \lambda/(2N)$ of the surfaces of the grating structure, N being the effective refractive index of the waveguide.

Similar to above, the surfaces or lines forming the (2-dimensional or 1-dimensional) grating structure of the waveguide comprise binding sites arranged on the surfaces or lines, configured to bind one or more target molecules, wherein the grating structure with the target molecules bound on the binding sites of the surfaces or lines of the grating structure is configured to diffract a portion of the coherent light propagating along the waveguide. The term "surfaces" can also comprise or consist of periodic 1-dimensional lines, instead of spanning a 2-dimensional surface.

The advantage of confining the light in both transverse directions with respect to the light propagation direction is that the detection signal of the diffracted portion of the coherent light can be increased. In addition, it can be combined with many standard fiber-coupled optical elements, or with on-chip integrated optical elements. The distributed Bragg reflector has the effect that a part of incoming light is reflected inside the waveguide. The coherent incoming light propagates in a forward direction, whereas the reflected part forming a detection signal propagates in a backward direction within the waveguide. Advantageously, a light source generating the coherent incoming light is configured to generate light with a tunable wavelength, such that fulfillment of the Bragg condition may be ensured in the event of fluctuations of the effective refractive index N.

By confining the light in both transverse directions in the waveguide, the carrier medium provides a quasi-one dimensional system for the coherent light propagating within the carrier medium and probing the target molecules. With respect to the propagating coherent light, the invention may therefore also be directed to a diffractometric sensing device for detecting binding events of one or more target molecules, comprising a quasi-one dimensional carrier medium, the carrier medium comprising a grating structure with a plurality of binding sites, the binding sites being configured to bind the one or more target molecules, wherein the grating structure is configured to diffract a portion of coherent light propagating in the waveguide so as to produce a constructive interference signal at a light detector, the signal being dependent on binding events of the one or more target molecules at the binding sites.

The surfaces or lines of the grating structure may be obtained by using the interference pattern of a phase mask. Alternatively, two modes travelling in opposite directions can be made to interfere with each other such that a standing wave is produced to illuminate the waveguide from the inside. Preferably, the illumination wavelength producing the surfaces of the grating structure match the wavelength of the coherent light used while operating the sensing device.

In an embodiment, the diffractometric sensing device further comprises an optical separator arranged between the grating structure and a light source emitting the coherent light, and configured to separate the incoming coherent light propagating in a first direction of the waveguide from the diffracted portion of the coherent light propagating in a second direction of the waveguide, opposite to the first direction.

The optical separator may for example comprise one of: a circulator, a beam splitter, a fused coupler, a y-splitter, a multimode interference splitter.

The separated optical signal may then be guided to an optical detector, such as a photodiode.

Before the grating structure, unwanted reflections of the incoming coherent light, that may reach the detector, may be reduced by using a waveguide with a low scattering loss a short distance between the separator and the grating structure to have less than 0.5 dB scattering loss and/or a suitable separator (less than -30 dB backscattering).

In an embodiment, the waveguide comprises an optical out-coupler abutting the grating structure configured to couple the light out of the waveguide after passing the grating structure.

The optical out-coupler has the advantage that unwanted reflections after the grating structure that may reach the optical detector can be reduced.

The optical out-coupler may for example comprise one of: a tapered part, an angle polished waveguide end, a coreless waveguide part, a light absorbing material (e.g. quantum dots, thin metal films, organic dyes or carbon black), and/or a refractive index matched material.

The waveguide confining light in both transverse dimensions may for example be one of: a nanofiber, a microstructured fiber, a nanobore fiber, and/or an on-chip waveguide.

The nanobore fiber or the microstructured fiber may be configured such that a fluid may flow through the fiber and coherent light guided along the fiber may interact with the fluid. A fluid can be any medium that contains the analyte of interest.

The waveguide may be connected to standard optical elements for example by on-chip manufacturing processes or by connectors, such as for example angled physical contact (FC/APC) fiber to fiber connectors.

Fiber based waveguides have the advantage of low transmission loss resulting in a good dark field illumination and thus leading to a high resolution of the sensor.

In an embodiment, the carrier medium comprises a plurality of stacked waveguides.

Stacking a plurality of waveguides has the advantage that the sensing area can be increased. Furthermore, the diffusion length of the target molecules until the target molecules reach a grating structure can be reduced, which improves the response times. Furthermore, the multiplexing capabilities can be improved by stacking the plurality of waveguides since the gratings of different waveguides can comprise different recognition elements interacting with different target molecules.

The waveguides confining the light in both transverse directions may be oriented parallel to each other or perpendicular to each other. Parallel stacking is easier feasible. Perpendicular stacking results in higher density and therefore faster response times and/or more multiplexing capabilities.

In an embodiment, an on-chip integrated waveguide confines the light in both transverse directions, and a light detector and/or a light source is or are integrated to the waveguide or is or are abutting the waveguide.

Arranging the light detector integrated to the waveguide has the advantage that a compact diffractometric sensing device can be obtained which is advantageous for miniaturization of the sensing device. Furthermore, costs related to packaging the sensing device may be reduced. Arranging the light detector to abut the carrier medium or waveguide has the advantage that detrimental effects to the detection signal, for example due to scattering losses, can be reduced by keeping the propagation length of the light after having been diffracted at the grating structure small. Here, a fiber based waveguide can provide the benefit of low scattering loss, enabling large (m to km) propagation length of the light after having been diffracted and separated from the incident light.

In an aspect of the invention, a planar waveguide on a substrate confines the light in one transverse direction, and a light detector and/or a light source is integrated to the same substrate. Arranging the light detector and or the light source integrated on the same substrate has the advantage that a compact diffractometric sensing device can be obtained, which is advantageous for miniaturization of the sensing device. Furthermore, costs related to packaging the sensing device may be reduced.

In an embodiment, the surfaces or lines in the carrier medium are arranged such that the light impinging on the grating lines can be diffracted into guided modes which are focused to a diffraction limited spot within the waveguide. The location of this diffraction limited spot may coincide with the location of a photodetector underneath the waveguide that transduces the intensity to a detectable signal. Possible integrated phototransducers are described in T. Suhara and H. Nishihara, "Integrated optics components and devices using periodic structures", IEEE J. Quantum Electron. 22, 845-867 (1986).

In an embodiment, the light detector comprises an aperture with an opening matching the spot size of the diffracted portion of the coherent light and the numerical aperture of the grating structure.

In an embodiment, the diffractometric sensing device comprises a detector array with a pixel size below the size of the diffracted focal spot.

In an embodiment, a light source emitting the coherent light is integrated on the same substrate as the waveguide.

Arranging the light source integrated to the same substrate has the advantage that a compact diffractometric sensing device can be obtained, which is advantageous for miniaturization of the sensing device enabling entirely new applications such as smart phone based diagnostic devices. Furthermore, costs related to packaging the sensing device may be reduced. Arranging the light source to abut the waveguide has the advantage that detrimental effects to the incoming coherent light, for example due to scattering losses, can be reduced by keeping the propagation length of the light before being diffracted at the grating structure small.

In an embodiment, the light source comprises an integrated laser such as a distributed feedback laser, quantum dot lasers or quantum well lasers or a point source such as a light scattering particle. Alternatively, the light can be coupled to the waveguide by a prism, a but-coupled fiber or a grating.

The incoming coherent light may be a guided mode or a free space mode and, in particular, may include a plane wave or a spherical wave. A guided plane wave may be launched by one of: An integrated laser such as a distributed feedback laser, quantum dot lasers or quantum well lasers, a grating for incoupling coherent light, a prism, a butt-coupled optical fiber. A guided spherical wave may be launched by one of: A grating for incoupling coherent light, a light scatterer (e.g. plasmonic particles (silver, gold), high-k dielectric particles ($Ta_2O_5$, $Nb_2O_5$, $HfO_2$) or simply large regular dielectric particles (latex, silica), and/or by a butt-coupled optical fiber.

In an embodiment, the diffractometric sensing device comprises a plurality of grating structures. Arranging the plurality of grating structures is especially advantageous for performing multiplexing.

In an embodiment, multiplexing is performed within a compartment, if the incoming light is illuminating several grating structures. This has the advantage that the effect of one condition on several molecular interactions can be studied. The grating structures can be spatially separated. The grating structures can be overlapping and by having a different periodicity can diffract the light into different spatial angles. Each grating structure can be specifically functionalized to only recognize one particular analyte.

In an embodiment multiplexing is performed within separate compartments which has the advantage that the effect of different conditions on the same molecular interaction can be studied.

In one embodiment these compartments are formed by wells in wellplates which has the advantage of being a commonly used format for many applications.

In an embodiment the grating structuring in these wells are illuminated under an angle larger than the angle of total internal reflection in order to perform dark field illumination. This can increase the sensitivity, as dark field illumination is performed and only a small volume of the medium above the grating structure is illuminated. Compared to dark field illumination with a waveguide, this has the benefit that is not necessary to launch a waveguide mode, which can result in faster measurement and cheaper manufacturing.

In an embodiment total internal reflection is achieved with the help of a prism. The entire system should be designed to avoid any kind of background light reaching the sensor. This can be realized, for example, by using a prism with highly absorbing side walls wherever no transparency is needed.

In an embodiment, the prisms are directly connected to the wellplates for example by injection molding. This has the advantage of not having an interface between the prism and the wellplate.

In embodiments the total internal reflection angle is achieved with the help of an index matching medium. The index matching can also be used to bridge an interface between a prism and a wellplate.

In an embodiment the advantages of diffractometric sensors are used to perform molecular profiling of complex samples by employing a plurality of diffractive gratings configured in such a way that the plurality of binding sites of each individual diffractive grating is chemically distinct from the plurality of binding sites of every other diffractive grating with the aim of optimally mapping the chemical complexity of the sample into a domain of lower complexity.

## BRIEF DESCRIPTION OF THE DRAWINGS

The herein described invention will be more fully understood from the detailed description given herein below and the accompanying drawings. The drawings are showing:

Fig.1          an embodiment of a diffractometric sensing device;

Fig.2          a further embodiment of a diffractometric sensing device;

Fig.3          a further embodiment of a diffractometric sensing device;

Fig.4          a further embodiment of a diffractometric sensing device comprising a waveguide;

Fig.5          various embodiments of a waveguide usable for the diffractometric sensing device;

Fig.6          various embodiments of a diffractometric sensing device with stacked waveguides;

Fig.7-11    embodiments of diffractometric sensing devices with arrangements wherein a waveguide and at least one of the light detector or the light source are arranged on a common substrate, wherein the grating structure comprises lines formed on a surface of the substrate;

Fig.12        a measurement setup with a total internal reflection (TIR) arrangement comprising a diffractometric sensing device;

Fig.13        an embodiment of an objective usable in a TIR configuration;

Fig.14-15  a setup in the TIR configuration integrated into a standardized wellplate format;

Fig.16        principles of holographic lithography for diffractometric sensing

Fig.17        possible application of the holographic lithography

Fig.18        components of a low noise measurement method as used for a coherent sensing technique;

Fig.19        different arrangements of diffractometric binder arrays;

Fig.20        a part of a diffractometric binder array;

Fig.21        an illustration of employing a diffractometric reference pattern that uses a common element for the two binders such that the binder responsible for the signal in the case of a backfilled diffraction pattern can be determined.

Fig.22        experimental real-time data obtained from a pilot study employing a set of 5 different binders profiling unmodified human serum.

Fig.23        endpoints of the diffractometric molecular profiling approach. The endpoint responses are markedly different from traditional immunosignaturing since not only the immunome is profiled but the entire serum interactome.

Fig.24 comparative endpoint data obtained by traditional immunosignaturing approaches for the same set of binders.

**DESCRIPTION OF THE EMBODIMENTS**

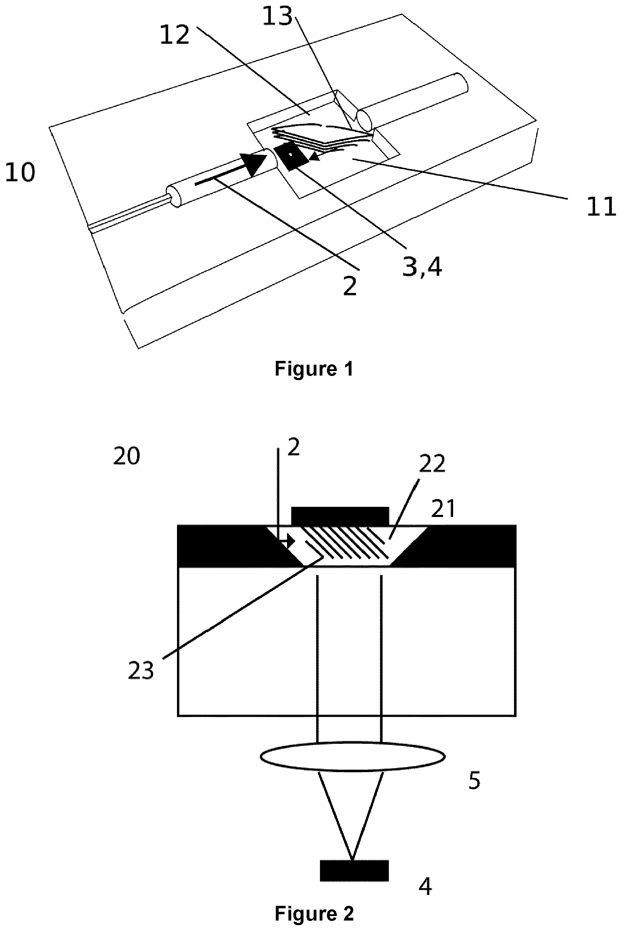

Figure 1 shows an embodiment of a diffractometric sensing device 10 comprising a three-dimensional carrier medium 11 with a grating structure 12 arranged within the carrier medium 11. The grating structure 12 comprises a plurality of surfaces 13 which are consecutively arranged to each other. The surfaces 13 have a plurality of binding sites, e.g. receptors, antibodies, DNA (deoxyribonucleic acid), RNA (ribonucleic acid), peptides, aptamers, GPCRs (G protein-coupled receptors), proteins or DARPins (design ankyrin repeat proteins), arranged thereon and configured to interact with target molecules, such as ligands, antigens, DNA, RNA, proteins, peptides (binding sites and target molecules not being visible in Figure 1). A light source generates coherent light 2 which propagates through the carrier medium 11. When passing the grating structure 12 with the target molecules bound to the binding sites on the surfaces 13, a portion of the coherent light 2 is diffracted at the grating structure 12 with the target molecules and is directed to the diffraction-limited focal point 3 positioned at a light detector 4. The focal point intensity depends on the amount of target molecules bound to the binding sites of the surfaces 13 and hence correlates to the binding affinities of the target. Therefore, it provides information on the binding event of the target molecules. The carrier medium 11 is transparent and permeable to the target molecules which are deposited into the carrier medium 11 before performing the diffractometric measurements. The configuration as shown in Figure 1 allows to probe the target molecules in a dark field illumination setup. Due to the structure of the curved surfaces 13, no additional lenses are needed to focus the diffracted coherent light onto the focal point 3 at the detector 4. In the shown embodiment, the detector 4 is arranged within the carrier medium 11 which allows for a compact design. The coherent light 2 is provided by a waveguide 1 butt-coupled to the carrier medium 11.

Figure 2 shows a further embodiment of a diffractometric sensing device 20 comprising a three-dimensional carrier medium 21 with a grating structure 22 arranged within the carrier medium 21. The grating structure 22 comprises a plurality of planar surfaces 23 which are arranged parallel to each other. As for the embodiment shown in Figure 1, the surfaces 23 have a plurality of binding sites arranged thereon and configured to bind target molecules. An external light source couples a plane wave of coherent light 2 which propagates through the carrier medium 21 and passes the grating structure 22 with the target molecules bound to the surfaces 23. A portion of the coherent light 2 is decoupled by scattering at the target molecules and gets diffracted towards an external light detector 4. Near-to-far-field transformation is performed by a lens 5 arranged between the grating structure 22 and the light detector 4. In this example the carrier is embedded in a well with two mirrors with angles of 45° to avoid background light on the detector 4.

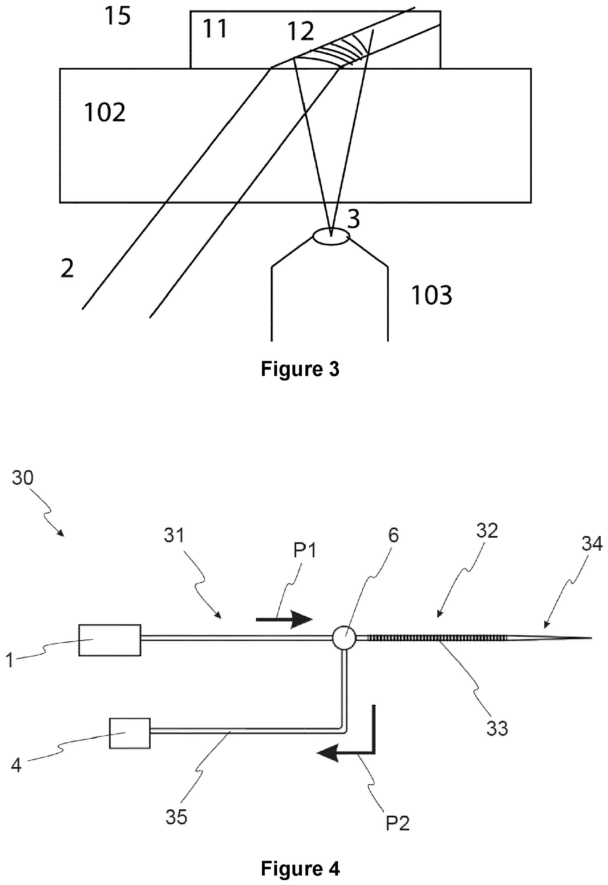

Figure 3 shows a further embodiment of a diffractometric sensing device 15, where the carrier medium 11 is situated on a transparent substrate 102, through which the grating structure 12 is illuminated. The coherent light 2 is focused into a diffraction-limited spot or point 3 upon binding of target molecules to the binding sites on the surfaces of the grating structure 12. In this example the diffracted light is collected with an objective 103.

Figure 4 shows a further embodiment of a diffractometric sensing device 30 comprising a waveguide 31 confining the light in both transverse directions. The waveguide 31 comprises a sensing area with a grating structure 32 having a plurality of surfaces or lines 33 arranged within the waveguide 31 and forming a distributed Bragg reflector with periodicity or grating period $\Lambda \approx \lambda/(2N)$, with $\lambda$ = light wavelength and N = effective refractive index of the grating in the waveguide. Binding sites are arranged on the surfaces or lines 33 and target molecules may interact with the target molecules such that light propagating through the waveguide 31 is reflected at the grating structure 32 with the signal intensity depending on the molecular interactions. After the sensing area, the waveguide 31 comprises an optical out-coupler 34 abutting the grating structure 32 and being in the shape of a tapered part 34 to avoid reflections. A light source 1 is arranged at one end of the waveguide 31. The diffractometric sensing device 30 further comprises a circulator 6 being arranged between the light source 1 and the grating structure 32 and configured to separate incoming coherent light (indicated by the arrow P1) from the portion of the incoming coherent light diffracted at the grating structure 32 (indicated by the arrow P2). The diffracted portion of the coherent light propagates through a waveguide 35 and is detected at a light detector 4.

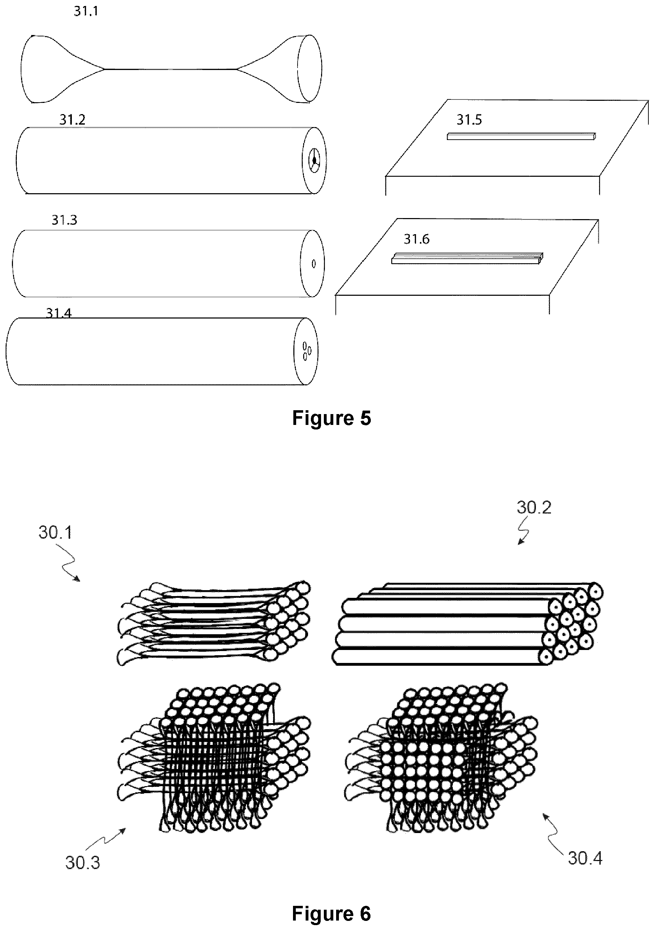

Figure 5 shows various embodiments of a waveguide confining the light in both transverse directions usable for the diffractometric sensing device, such as a tapered optical nanofiber 31.1, microstructure hollow fiber with a glass hanging core 31.2, a nanobore fiber 31.3, a fiber 31.4 with multiple nanobores, an on-chip ridge waveguide 31.5 and a slot waveguide 31.6

Figure 6 shows various embodiments of a diffractometric sensing device with stacked waveguides, such as an embodiment of a diffractometric sensing device 30.1 with tapered optical fibers which are stacked in parallel, an embodiment of a diffractometric sensing device 30.2 with nanobore fibers which are stacked in parallel, an embodiment of a diffractometric sensing device 30.3 with tapered optical fibers which are stacked perpendicular to each other in two perpendicular directions, and an embodiment of a diffractometric sensing device 30.4 with tapered optical fibers which are stacked perpendicular to each other in three perpendicular directions. The high density of the fibers allows an effective sensing in the sample volume.

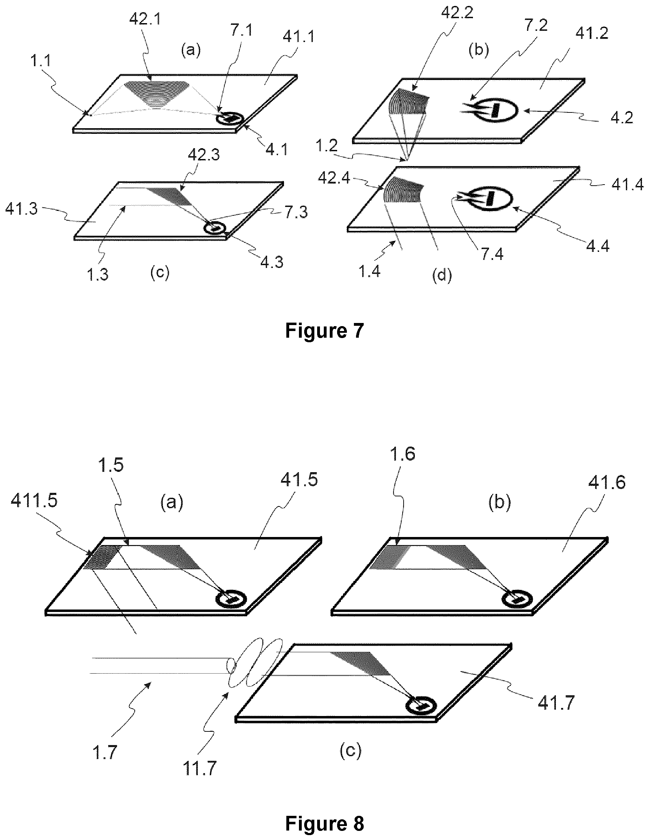

Figure 7-11 show embodiments of diffractometric sensing devices with arrangements where the dark field illumination is provided by a planar waveguide. The surfaces or lines on which binding sites are arranged are designed to focus the light to a diffraction limited spot within the waveguide. The detector and/or the light source is or are integrated to the same substrate at the location of the diffraction-limited focal spot.

Figure 7(a) shows an embodiment where the incoming coherent light is coming from a guided point source 1.1. The guided point source 1.1 may be a light scatterer which is illuminated by another light source. The light passes a grating structure 42.1 with target molecules. A portion of the light is diffracted at the grating structure 42.1 with the target molecules and directed towards a light detector 4.1. The light detector comprises an aperture 7.1 with an opening preferentially matching the spot size of the diffracted portion of the coherent light and the numerical aperture of the grating structure 42.1. The guided point source 1.1, the grating structure 42.1 and the light detector 4.1 are arranged on a common substrate 41.1, such that an integrated on-chip diffractometric sensing device is provided.

Figure 7(b) shows a further embodiment where a grating structure 42.2 and a light detector 4.2 with an aperture 7.2 similar to the one as shown in Figure 7(a) are arranged on a common substrate 41.2. The light source is a free space point source 1.2 arranged below the common substrate 41.2.

Figure 7(c) shows a further embodiment where a grating structure 42.3 and a light detector 4.3 with an aperture 7.3 are arranged on a common substrate 41.3. A guided plane wave 1.3 being launched and propagating towards the grating structure 42.3 is diffracted at the grating structure 42.3 by being scattered at the target molecules arranged at the grating structure 42.3.

Figure 7(d) shows a further embodiment where a grating structure 42.4 and a light detector 4.4 with an aperture 7.4 similar to the previous Figures 7(a)-(c) are arranged on a common substrate 41.4. A light source generates a free space plane wave 1.4 from below the common substrate 41.4.

The grating lines $(x_j, y_j)$ are parabolas and may be described in an orthogonal x-y coordinate system by the relation

$$y_j = a x_j^2 - \frac{1}{4a}$$

with $a = \dfrac{N}{2j\lambda}$ , $j$ = an integer index and $a$ = form parameter of the parabola,

for a plane wave of the incoming coherent light (1.3) with k-vector along the negative y-direction, $\lambda$ being the wavelength of the coherent light and $N$ the refractive index of the carrier medium. The focal point is at the origin and the y-axis coincides with the symmetry axes of the parabolas.

For a guided point source (1.1), the grating lines $(x_j, y_j)$ may be described by the relation

$$\frac{x_j^2}{a^2} + \frac{y_j^2}{b^2} = 1$$

with

$$a^2 = \frac{d^2}{4} + \frac{\lambda}{N} j + \left(\frac{\lambda}{2N} j\right)^2$$

and

$$b^2 = + \frac{\lambda}{N} j + \left(\frac{\lambda}{2N} j\right)^2 .$$

with the grating lines being ellipses with the foci of the ellipses being at the point source and the focal spot of the grating structure, with d being the distance between the point source and the focal point or spot.

Figure 8(a) shows a further embodiment of a diffractometric sensing device wherein a plane wave 1.5 is launched along the substrate 41.5 by use of an in-coupling grating 411.5.

Figure 8(b) shows a further embodiment of a diffractometric sensing device wherein an integrated laser such as a distributed feedback laser 1.6 is integrated on the substrate 41.6 to launch a plane wave along the substrate 41.6.

Figure 8(c) shows a further embodiment of a diffractometric sensing device with a fiber 1.7 with an optical system 11.7 comprising lenses, the fiber 1.7 butt-coupled to the substrate 41.7. The optical system 11.7 is used to launch a plane wave along the substrate 41.7.

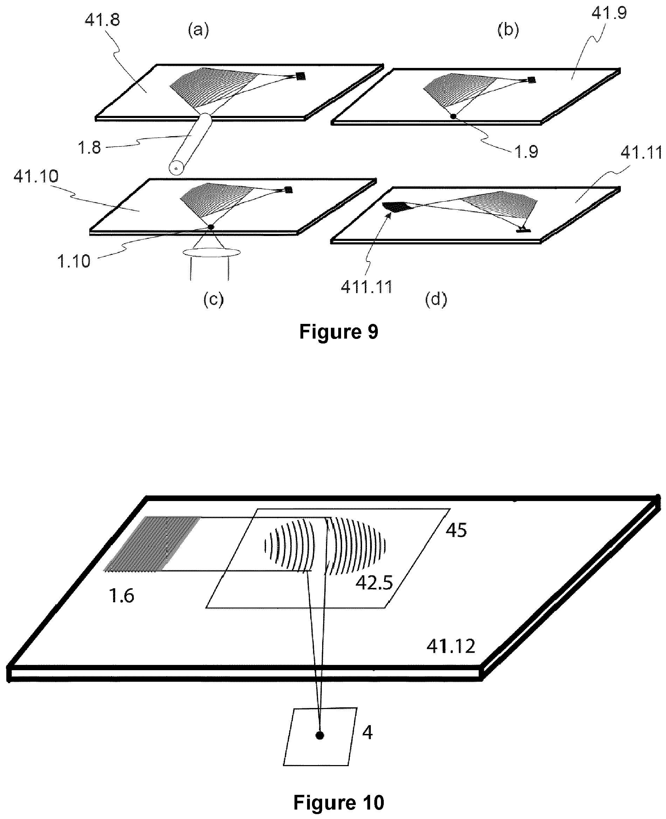

Figure 9(a) shows a further embodiment of a diffractometric sensing device with a fiber 1.8 butt-coupled to a substrate 41.8 to launch light from a point source into the substrate 41.8.

Figure 9(b) shows a further embodiment of a diffractometric sensing device with a point light source 1.9 integrated on the substrate 41.9.

Figure 9(c) shows a further embodiment of a diffractometric sensing device with a light scatterer 1.10 arranged on the substrate 41.10.

Figure 9(d) shows a further embodiment of a diffractometric sensing device with an integrated in-coupling grating 411.11 for launching light to form a (secondary) point source on the substracte 41.11.

Figure 10 show a further embodiment of a diffractometric sensing device having a light source 1.6 integrated on a common substrate 41.12 as the waveguide with the grating structure 42.5 in the carrier medium 45 and an out of plane detector 4.

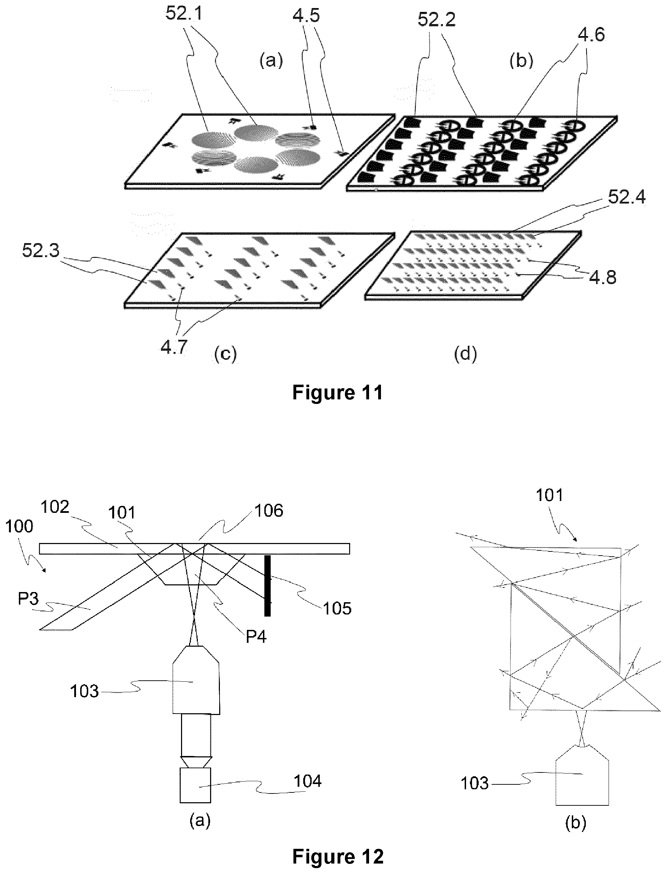

Figure 11(a)-(d) show different embodiments of diffractometric sensing devices with a plurality of grating structures 52.1-52.4 and a plurality of light detectors 4.5-4.8 arranged in an array on a common substrate. Figure 11(a) shows the example of guided point sources, Figure 11(b) the example of free space point sources, Figure 11 (c) and Figure 11(d) examples of guided plane waves.

Figure 12a shows a measurement setup with a coherent binding pattern for a total internal reflection (TIR) arrangement. The setup comprises a prism 101 and a substrate 102 which can be separated by an index matching oil. In some embodiments, the prism itself may serve as a substrate. The substrate and prism material is preferentially glass, but any transparent material - i.e. injection moldable polymers - is possible. In addition, it should exhibit low volume scattering, therefore a low photo-elastic coefficient, isothermal compressibility and glass transition temperature of the material is desired (S. Sakaguchi, S.-I. Todoroki, and S. Shibata, "Rayleigh Scattering in Silica Glasses", J. Am. Ceram. Soc. 79, 2821-2824 (1996)). A focusing grating structure 106 with binding of target molecules thereon, as described throughout the present application, is located on the substrate 102. The grating structure 106 is illuminated under total internal reflection (indicated by the beam P3). The portion of the diffracted light (indicated by P4), is preferentially collected from the prism side by using an objective 103 matching the numerical aperture of the grating structure with the target molecules in combination with a camera or photodiode 104. In some embodiments, a non-transparent spatial filter could be used in conjunction with an array photodetector in place of the objective 103. A reference photodiode or camera 105 is used to reference the totally internally reflected beam, alternatively a beam splitter can be used before the beam enters the prism to reference the incident beam power. In addition, a polarizer in the beam path may be used to control the polarization of the incident beam. The prism areas not used for illumination or collection may be rendered absorptive (i.e. by carbon black paint, chromium black or similar) to reduce stray light. The setup is advantageous, since only the evanescent field is used to sample the target molecules bound to the grating structure which reduces the noise. Figure 12b shows a possible way to optimize the prism shape to reduce straylight. In this arrangement the diffracted light is collected on the sample side. In principle, the shape of the prism 101 in Figure 12a can be adjusted similarly to reduce the straylight due to reflected beams. In an embodiment some sidewalls of the prism 101 are designed to minimize reflections, for example, by applying a strongly absorbing coating.

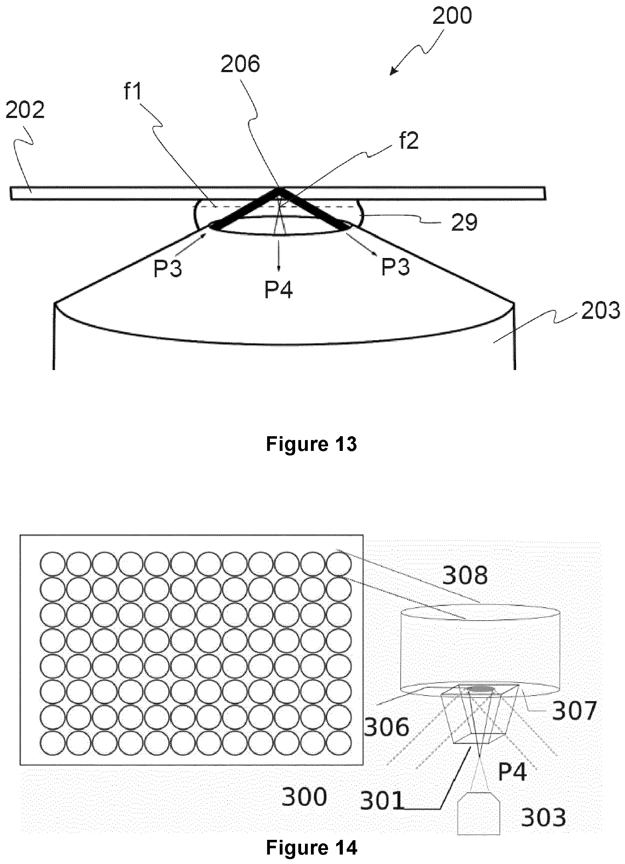

Figure 13 shows an embodiment of the objective 203 usable in a TIR configuration 200. The working principle is similar to prior art objectives used in total internal reflection fluorescence microscopy. However, the difference is that the focal plane f1 is not at the same position as the point of total internal reflection, but at a certain distance below the point of total internal reflection at the substrate 202. The focal point or spot f2 of the grating structure 206 with the target molecules is positioned at the height of the focal plane f1, as can be seen in Figure 13. In some embodiments, deformable lenses are used in order to switch the focus between the focal plane and the substrate. The numerical aperture of the objective 203 for imaging the focal point f2 of the grating structure 206 with the target molecules matches the numerical aperture of the grating structure 206. A drop of immersion oil 29 is arranged between the objective 203 and the substrate 202.

Figure 14 shows a setup 300 in the TIR configuration integrated into a standardized wellplate format. An optical prism 301 is connected to an optically clear bottom 307 of an incubation chamber 308 of a standard format wellplate. The prism 301 and the bottom 307 may be monolithic or made of two individual parts fixed to each other. A grating structure 306 with target molecules bound to it is formed on the bottom of the wellplate 307. The diffracted light P4 is collected by an optical system 303 with an aperture matched to the aperture of the grating structure arranged below the standard format wellplate. The optical system 303 either consists of a spatial filter in combination with an arrayed photodetector or an objective. Preferentially, the aperture of the grating structure 306 is smaller than 0.1 to increase the size of the focal spot and hence to increase the mechanical tolerances for an accurate measurement.

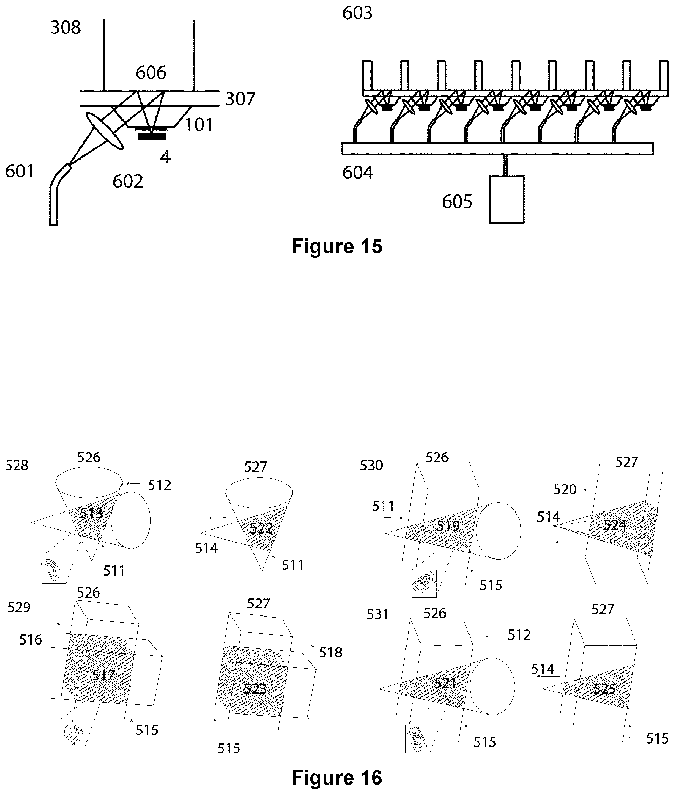

Figure 15 show an embodiment of the combination of a total internal reflection arrangement and the wellplate format. The grating structure 606 is situated on the transparent bottom 307 of a well 308 in a microtiter plate 603. It is illuminated by a collimated beam (e.g. by collimating lens 602) coming from a fiber 601 at an angle greater than total internal reflection. The light is diffracted into a diffraction limited spot and measured with a detector 4. The illumination of all wells 308 can be performed with one or few laser sources 605 being directed to the fibers for each well 308 by beam splitters or optical switches 604.

The grating structure can in general be manufactured by different means, such as photolithography or microcontact printing. In an embodiment of the TIR arrangement with microtiter plates, these processes can be conducted on a substrate and bonding to the wells can be performed after creating the structures. Alternatively, the structuring is performed in each individual well.

Figure 16 shows four illustrations of the fabrication 526 of the grating structure in the carrier medium by holographic lithography in three dimensions by creating an interference pattern. Then the interference pattern is used to immobilize binding sites in the shape of the interference pattern and thus create a diffraction pattern. Then the diffraction pattern can be read out in specific ways 527. Figure 16 shows four exemplary specific ways of read-out 527 of the diffraction patterns. The diffracted power can be used to analyze molecular interactions at the binding sites.

528 shows how a diverging wave 511 and a converging light path 512 are interfered to create an interference structure 513. When the resulting grating structure 522 is illuminated by the diverging beam 511, the structure causes focusing into a diffraction limited spot or focal point 514.

529 shows, how two plane waves 515, 516 are interfered to cause an interference pattern of parallel planes 517. The resulting grating structure 523 causes light to be redirected into a diffracted beam or wave 518 when illuminated by a plane wave 515.

530 shows how a diverging wave 511 and a plane wave 515 interfere to cause an interference pattern 519. When the resulting grating structure 524 is illuminated with a plane wave 520 of reverse wavevector k compared to plane wave 515, light is focused into a spot 514.

531 shows how a converging wave 512 and a plane wave 515 are interfered. When the resulting grating structure 525 is illuminated with a plane wave 515, light is focused into a spot 514.

This method can be used in two or three dimensions. Therefore, an integrated fabrication and read-out of the diffractometric sensing device can be achieved. Alternatively, two photon 3D patterning may be used for patterning. A preferable candidate for a suitable matrix material is a hydrogel. Possible alternatives are a mesoporous material or DNA origami.

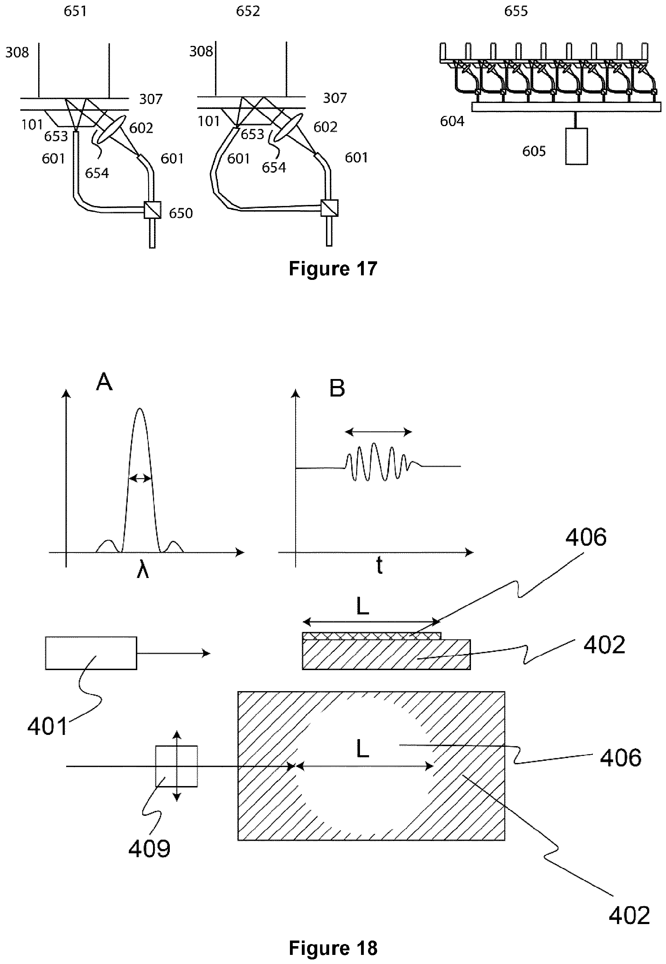

Figure 17 illustrates how the concept of holographic lithography can be implemented in an example of total internal reflection in a wellplate 308. Coherent light is split up by a beam splitter 605 and the wellplate bottom 307 is illuminated by a diverging beam 653 and a plane wave 654 (e.g. collimated by lens 602) through a prism 101. The plane wave 654 is illuminated under an angle that suits the desired readout. Index matching to avoid reflections can be applied. The diverging beam 653 can come in at normal angle of incidence (see left-hand figure referenced as 651) for easier arrangement. Alternatively, not normal illumination can be performed (see central figure referenced as 652). This illumination can be performed such that the signal in the readout scheme is scattered in backward direction. This backward direction can be beneficial in terms of signal to background illumination, because non-coherent background illumination is usually stronger in forward direction. Instead of using fibers 601 free space beam path with lenses for achieving a diverging beam is also an option. It is possible to illuminate entire wellplates 655 with only one light source 605 with the use of optical switches 604 or micro mirrors. The readout of such devices can be performed according to Figure 15 this corresponds to the scheme 530 illustrated in Figure 16.

In the following, a method to probe target molecules using the diffractometric sensing device according to the present invention is described.

The grating structure can be manufactured by different means, such as e.g. photolithography or microcontact printing. In an embodiment of total internal reflection with microtiter plates, these processes can be conducted on a substrate, and bonding to the wells can be performed after creating the structures. Alternatively, the structuring is performed in each individual well.

*Pulsed source for readout in integrated or fiber based devices*

By using an ultrafast laser pulse and time resolved measurement of the pulse, the exact location of scatterings can be determined in time domain. This can be used to separate the background light scattered from regions before and after the sensing area. This could also be applied for multiplexing on the same waveguide and assigning the different scatterings to different grating structures with target molecules. The pulse length should be designed to match the grating length.

*Source properties for overall reduction of noise*

The limiting noise in a coherent sensing technique may arise from interferences of the incident beam with randomly scattered light that is not stable over time. These random interferences cause a temporally changing speckle pattern in the beam envelope of the incident beam, which translates into a temporally changing speckle pattern in the focal plane of the coherent assembly. Any refractive index change within the coherence length of the laser can influence the speckle pattern of the beam envelope of the incident beam. It is therefore desired to limit the coherence length of the laser to the size of the coherent assembly. Other ways to reduce the coherence length is to use a pulsed laser with a pulse duration such that the pulse length matches or slightly exceeds the size of the grating structure. In addition, in order to temporally average the speckle pattern of the incident beam, the laser beam may be shifted laterally with a frequency higher than the acquisition time of the optical system and an amplitude several times larger than the speckle size but only a fraction of the size of the coherent assembly.

Figure 18 shows components of the measurement as used for the method described in the foregoing paragraphs. Graph A shows the spectral width of a laser 401 (intensity as a function of wavelength λ) with a stabilized center wavelength chosen such that the coherence length matches or slightly exceeds the length L of the coherent assembly 406, which is arranged on a substrate 402. λ is the wavelength. Graph B shows the operation of a laser in pulsed mode (intensity as a function of time) with a pulse duration such that the corresponding pulse length matches or slightly exceeds the size of the coherent assembly 406.

In the lower part of Figure 18, there is shown a shaking device 409 configured to laterally deflect (indicated by vertical double arrow) the incoming laser beam (indicated by horizontal arrow) by a fraction of the size of the coherent assembly 406 to temporally average the speckles of the incident beam.

The described method and setup has the advantage that the negative effects arising from a too large coherence length can be reduced by using an appropriate spectral width of the laser and/or an appropriate pulsing of the laser and/or an appropriate deflection of the laser beam.

In the following, an application of the diffractometric sensing device according to the present invention is described.

*Real time molecular profiling of the human interactome using any coherent binding site arrangement*

The human interactome is the set of protein-protein interactions that occur in human cells. An important advantage of any coherent sensing device is that it enables real-time measurement of binding events in complex samples such as blood and other body fluids, cell cultures or environmental samples. This provides a possibility for classifying such samples based on a large number of binding curves that serve as fingerprints for the specific sample.

The components and features of a diffractometric sensing device that can perform real time molecular profiling are as follows:

- A large diffractometric array of one or more binders (e.g. orthogonally arranged) is exposed to a biological sample (i.e. blood) and generates a continuous binding signal in each element.

- The elements of the array can be composed of high-affinity as well as low-affinity binders of any chemical or biochemical form, e.g. peptides, DNA, RNA, lipids, antibodies, polysaccharides or protein fragments.

- The individual elements of the diffractometric array can be backfilled with a binder similar or completely different in chemistry to tune the apparent interaction constant.

- The individual elements of the diffractometric array can all be backfilled with the same binder to allow for binding signal normalization.

- The signal origin can be determined via a reference array that employs a common backfiller.

- Alternatively, or simultaneously, the sample can be spiked with a known concentration of analyte to calibrate the system and determine the signal origin.

- The sample can be diluted by a known substance to a predetermined concentration.

- During a binding experiment using a binder array and a biological sample from e.g. a patient the output of the array can be seen as a time-dependent vector, whose trajectory in the high dimensional vector space is unique for the composition of the biological sample. Thus, the array generates a unique fingerprint for the biological sample of any patient and condition and is therefore a direct measure of the current health status of the individual.

- The obtained trajectory may be compared to a large database of existing binding data linked to genetic, anatomic and clinical data of the corresponding patient by means of machine learning techniques.

- Compared to existing molecular profiling techniques (e.g. HealthTell, Entopsis) a coherent transducer provides real-time information and does not rely on rinsing steps. This allows for the monitoring of weak binders that would otherwise be washed away and the acquisition of molecular kinetic data. For this purpose, different diffractometric binder configurations and arrays may be used, as shown in the following.

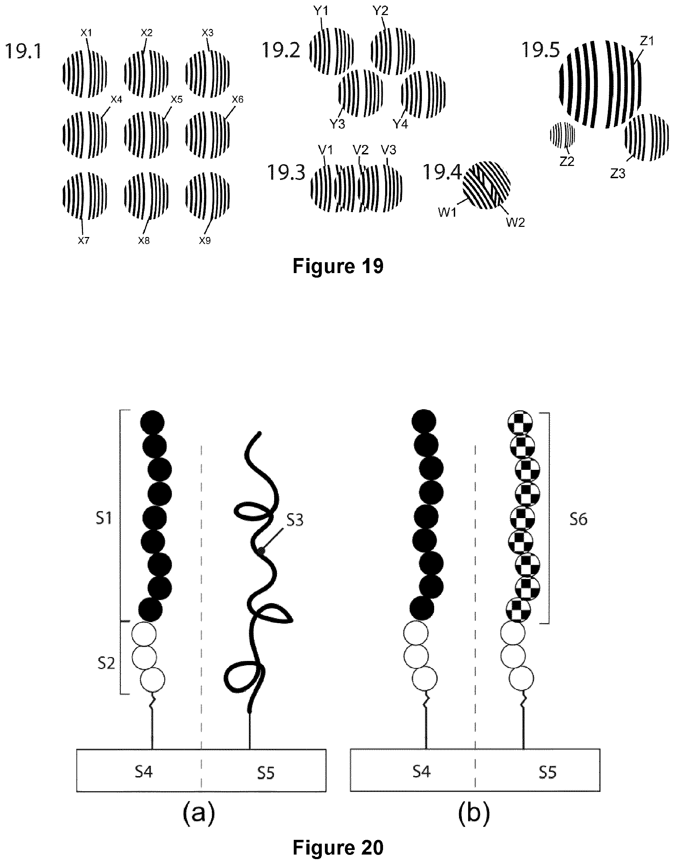

Figure 19 shows different arrangements of diffractometric binder arrays. Figure 19(a) shows a rectangular arrangement, Figure 19(b) shows a staggered arrangement, Figure 19(c) shows an overlapping arrangement, Figure 19(d) shows a twisted arrangement, and Figure 19(e) shows a size-varied arrangement. Thus, multiplexing can be performed in a single compartment by having several grating structures with different binding sites immobilized on the grating structures and by configuring the different grating structures to diffract the light to different locations, which can be achieved by different spatial frequencies (Figure 19(d)) of the grating and/or by different locations of the gratings (Figure 19(a), 19(b), 19(c) and 19(e)).

Figure 20 shows a part of a diffractometric binder array consisting of a binder s1 tethered to the surface in the ridge area of the grating pattern s4 with an optional invariable linker s2. The binder array is either uniformly passivated (as indicated by s3) in the grooves of the grating s5 or backfilled with a second binder s6 which is chemically assimilated or not assimilated to the first binder in the grooves of the grating.

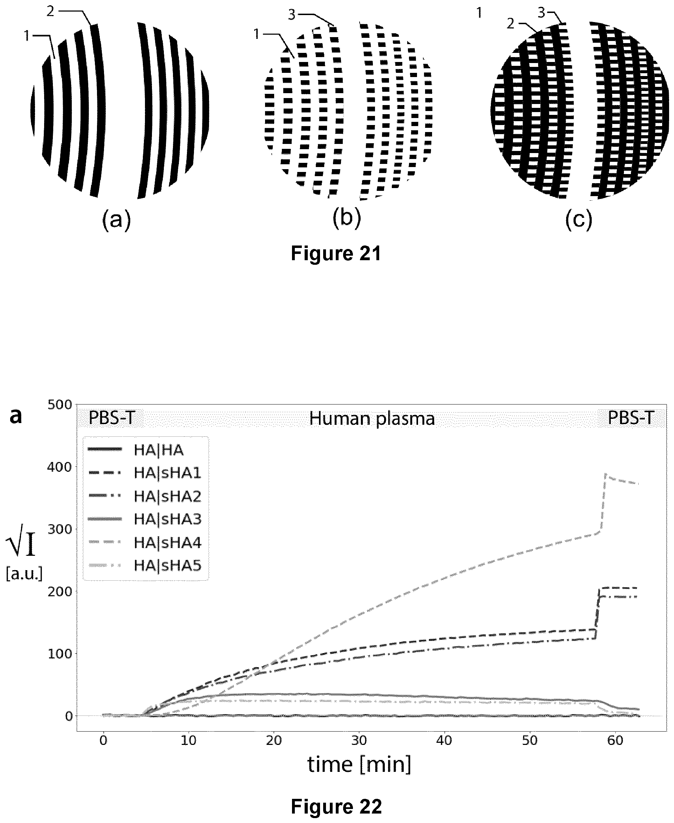

Figure 21 shows how a diffractometric reference pattern can be employed to determine the binder responsible for the signal in a backfilled diffractometric structure. The referencing scheme consist of the passivated region r1 and the binder r2 as shown in Figure 21 (a) as well as a passivated region r1 combined with the non-binding backfilling molecule r3 as shown in Figure 21(b). The non-binding backfilling molecule r3 can be either on the grooves or the ridges of the diffractive grating. The final element consists of the combination of the binder r2 and non-binding backfilling molecule r3 in either ridges/grooves or grooves/ridges configuration, as shown in Figure 21(c).

Figure 22 shows molographic experimental data obtained from a pilot study employing a binder denoted by HA that is backfilled with a set of 5 different binders denoted by sHA1 ... sHA5. The binders are exposed to human plasma and the diffracted signal (square root of light intensity in arbitrary units) is measured as a function of time in minutes. Distinct endpoints and kinetics can be observed for the same sample.

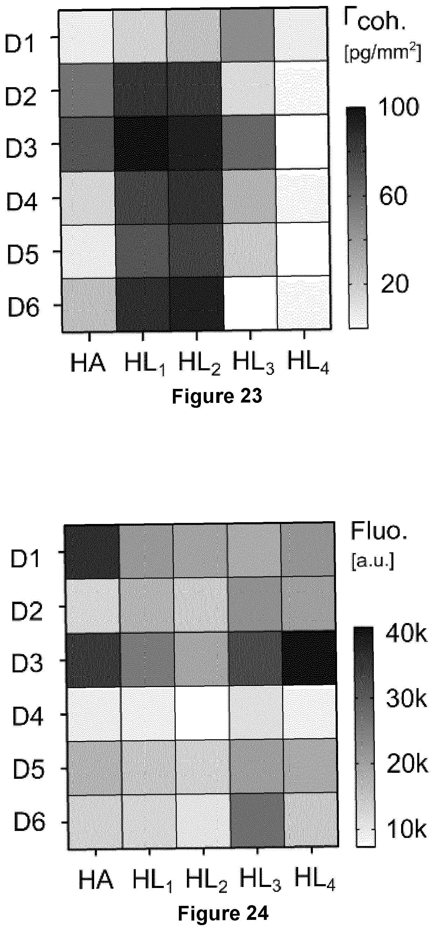

Figure 23 shows endpoint data from a diffractometric molecular profiling approach employing 5 different binders denoted HA, HL1 ... HL4. Human blood serum from 6 different donors denoted D1 ... D6 is exposed to the binders. The blood serum is incubated and the diffractometric signal is measured at equilibrium.

Figure 24 shows comparative endpoint data obtained by traditional immunosignaturing approaches using optical density OD measurement obtained by a fluorescence signals of anti-human Immunglobulin G (IgG) antibodies from the same donors D1 ... D6 for the same binders denoted HA, HL1 ... HL4. Comparing Figure 23 and Figure 24 reveal drastically different endpoints for the two approaches. This has to do with the fact that the novel diffractometric molecular profiling probes the entire interactome including weak binders, whereas traditional immunosignaturing relies on stringent washing of the assay surface and therefore does not take weak binders into account.

## LIST OF DESIGNATIONS

| | |
|---|---|
| 10, 15, 20, 30, 30.1-30.4, 200, 300 | diffractometric sensing device |
| 11, 21, 45 | carrier medium |
| 31, 31.1-31.6, 35 | waveguide |
| 12, 22, 32, 42.1-42.4, 42.5, 52.1-52.4, 106, 206, 306, 406, 522-525, 606 | grating structure |
| 13,23,33 | surfaces |
| 1,1.1, 1.2, 1.6, 1.9, 1.10 | light source |
| 1.7, 1.8, 601 | fiber |
| 11.7 | optical system |
| 2, 1.3, 1.4, 1.5, P1, P3 | coherent light |
| P2, P4 | diffracted light |

(continued)

| | |
|---|---|
| 3, f2 | diffraction-limited focal point or focal spot |
| f1 | Focal plane |
| 4, 4.1-4.8 | light detector |
| 5 | lens |
| 6 | circulator |
| 7.1-7.4 | aperture |
| 19.1-19.5 | arrangements for multiplexing |
| 34 | optical out-coupler |
| 31.1 | tapered optical nanofiber |
| 31.2 | microstructured fiber with hanging core |
| 31.3 | nanobore fiber |
| 31.4 | fiber with multiple (e.g. three) nanobores |
| 31.5 | on-chip ridge or rectangular wave-guide |
| 31.6 | on-chip slot waveguide |
| 41.1-41.12 | substrate |
| 411.5, 411.11 | in-coupling grating |
| 101, 301 | prism |
| 102, 202, 402, | substrate |
| 103, 203, 303 | objective |
| 104 | camera |
| 105 | reference camera |
| 29 | immersion oil |
| 307 | optically clear bottom |
| 308 | well, microwell plate, incubation chamber |
| 401 | laser |
| 409 | shaking device |
| 511, 653 | diverging beam |
| 512 | converging beam |
| 513, 517, 519, 521 | interference pattern |
| 514 | diffraction limited spot |
| 515, 516, 520, 654 | plane wave |
| 518 | diffracted plane wave |
| 526, 651, 652, 655 | holographic patterning |
| 527 | diffractometric readout |
| 528 - 531 | holographic lithography of a diffractometric structure and readout |
| 602 | collimating lens |
| 603 | microtiter plate |
| 604 | optical switch |
| 605 | laser |
| 650 | beam splitter |
| s1 | binder |
| s2 | linker |
| s3 | passivation |
| s4 | ridge area of the grating structure |
| s5 | groove area of the grating structure |
| s6 | second binder |
| r1-r3 | regions |
| v1-v3 | chemically different grating structures |
| w1, w2 | chemically different grating structures |
| x1-x9 | chemically different grating structures |

(continued)

| y1-y4 | chemically different grating structures |
| z1-z3 | chemically different grating structures |

**Claims**

1. Diffractometric sensing device (10, 20, 15) for analyzing molecular interactions, comprising a three-dimensional transparent carrier medium (11, 21), the carrier medium (11, 21) being permeable to the one or more target molecules and comprising a grating structure (12, 22) with a plurality of consecutive surfaces (13, 23) and a plurality of binding sites arranged thereon, the binding sites being configured to bind the one or more target molecules, wherein the grating structure (12, 22) is configured to diffract a portion of coherent light (2) propagating through the carrier medium (11, 21) so as to produce a constructive interference signal at a light detector (4), the signal being dependent on molecular interactions at or in the vicinity of the binding sites.

2. A diffractometric sensing device (30, 30.1, 30.2, 30.3, 30.4), for analyzing molecular interactions, the device comprising a waveguide (31, 31.1-31.6, 35) confining the light in both transverse directions, with an electromagnetic field cross-section allowing for the light to interact with a grating structure (32) in a carrier medium with a plurality of consecutive lines or surfaces (33) and a plurality of binding sites arranged thereon, the binding sites being configured to bind the one or more target molecules, wherein the grating structure (32) is configured to diffract a measurable portion of coherent light (P1, P2) propagating through the waveguide the signal being dependent on molecular interactions at or in the vicinity of the binding sites.

3. A diffractometric sensing device for analyzing molecular interactions, the device comprising a waveguide arranged on a substrate (41.1, 41.2, 41.3, 41.4, 41.5, 41.6 ,41.7 ,41.8, 41.9, 41.10, 41.11, 41.12) and further comprising a light detector (4, 4.1, 4.2, 4.3, 4.4, 4.5, 4.6, 4.7, 4.8) and a coherent light source (1, 1.1 - 1.10) with at least one (1.1, 1.2, 1.6; 4.1, 4.2, 4.3, 4.4, 4.5, 4.6, 4.7, 4.8) of the two being integrated on the same substrate (41.1, 41.2, 41.3, 41.4, 41.5, 41.6 , 41.7, 41.8, 41.9, 41.10, 41.11, 41.12), further comprising a grating structure (42.1, 42.2, 42.3, 43.4, 42.5, 52.1, 52.2, 52.3, 52.4) in a carrier medium with a plurality of consecutive lines or surfaces and a plurality of binding sites arranged thereon, the binding sites being configured to bind the one or more target molecules, wherein the grating structure is configured to diffract a portion of the evanescent field of the coherent light (1.3, 1.4, 1.5) propagating through the waveguide so as to produce a constructive interference signal at the light detector (4, 4.1, 4.2, 4.3, 4.4, 4.5, 4.6, 4.7, 4.8), the signal being dependent on molecular interactions at or in the vicinity of the binding sites.

4. A diffractometric sensing device according to claim 3, wherein both the light source (1.1, 1.2, 1.6) and the sensor (4.1, 4.2, 4.3, 4.4, 4.5, 4.6, 4.7, 4.8) are integrated on the same substrate as the waveguide.

5. Holographic method (526, 651, 652) to lithographically create a coherent grating structure (522, 523, 524, 525) in a carrier medium with a plurality of consecutive lines or surfaces and a plurality of binding sites arranged thereon, the binding sites being configured to bind one or more target molecules, wherein the grating structure is configured to diffract a measurable portion of light, with the signal being dependent on molecular interactions at or in the vicinity of the binding sites.

6. A diffractometric sensing device (300) for analyzing molecular interactions, the device comprising a grating structure (306) in a carrier medium integrated into a microwell plate (308) with a plurality of consecutive lines or surfaces (306) and a plurality of binding sites arranged thereon, the binding sites being configured to bind the one or more target molecules, wherein the grating structure under illumination is configured to diffract a portion of light (P4) so as to produce a constructive interference signal captured by a light detector (303), the signal being dependent on molecular interactions at or in the vicinity of the binding sites.

7. A diffractometric sensing device (200, 300) according to claim 6 for analyzing molecular interactions, wherein the illumination of the grating structure is performed by the evanescent field of a totally internal reflected beam.

8. Diffractometric sensing device according to any one of the preceding claims, wherein the surfaces or lines (13) of the grating structure are configured in a curved shape (12, 106, 206, 306, 42.1, 42.2, 42.3, 42.4, 42.5, 52.1, 52.2, 52.3, 52.4, 522, 523, 524, 525) to focus the diffracted portion of the coherent light into a diffraction limited focal spot captured by the detector (4).

9. Diffractometric sensing device according to any one of the preceding claims, wherein the carrier medium (11, 21, 45) is made of a hydrogel or a mesoporous material or DNA scaffold or a 2 dimensional adlayer.

10. Diffractometric sensing device according to any one of the preceding claims, wherein the diffracted light is focused by a lens (5) or observed in the farfield in terms of the Fraunhofer distance.

11. Diffractometric sensing device according to any one of the preceding claims, wherein multiplexing is performed in a single compartment by having several grating structures (52.1, 52.2, 52.3, 52.4) with different binding sites immobilized on the grating structures and by configuring the different grating structures to diffract the light to a different location, which can be achieved by different spatial frequencies of the grating and/or by different locations of the gratings.

12. Diffractometric sensing device according to any one of the preceding claims, with arrays of diffractive gratings consisting of binders including but not limited to peptides, DNA, RNA, lipids, antibodies, polysaccharides or protein fragments configured in such a waythatthe plurality of binding sites of each individual diffractive grating can be cloosen to be chemically distinct from the plurality of binding sites of every other diffractive grating with the intention of optimally mapping the chemical complexity of the sample into a domain of lower complexity.

13. Diffractometric sensing device according to any one of the preceding claims, wherein the coherent pattern formed by the binding sites arranged on the plurality of the consecutive surfaces of the grating structure is backfilled with another binder to tune the apparent affinity constant of the overall sensing device or normalize the appearing signal with a known concentration of analyte previously spiked into the sample to be measured.

14. Diffractometric sensing device according to any one of the preceding claims, wherein an array of coherent patterns formed by the binding sites arranged on the plurality of the consecutive surfaces of the at least one grating structure is used for both real-time and endpoint molecular profiling of patient samples.

15. Diffractometric sensing device according to claim 14, wherein the obtained kinetic and end point data are compared by means of machine learning techniques to a large database of existing binding data linked to genetic and/or anatomic and/or clinical data of the corresponding patient or other patients.

**Figure 1**

**Figure 2**

15

11    12

102

2

3

103

**Figure 3**

30

31    P1    6    32    34

1

4

35    P2

33

**Figure 4**

**Figure 5**

**Figure 6**

**Figure 7**

**Figure 8**

41.8 (a)

1.8

41.9 (b)

1.9

41.10

1.10

41.11

411.11 (d)

(c)

**Figure 9**

45

1.6

42.5

41.12

4

**Figure 10**

52.1    4.5

(a)

52.2    4.6

(b)

52.3

4.7    (c)

52.4

4.8

(d)

**Figure 11**

100
102    101    106

P3

P4    105

103

104

(a)

101

103

(b)

**Figure 12**

**Figure 13**

**Figure 14**

308

606

307

101

4

601

602

603

604

605

**Figure 15**

528 526 512

513

511

527

522

514 511

530 526

511

519

515

520 527

514 524

529 526

516

517

515

527

518

523

515

531 526

512

521

515

527

514 525

515

**Figure 16**

**Figure 17**

**Figure 18**

**Figure 19**

(a)                    (b)

**Figure 20**

**Figure 21**

**Figure 22**

Figure 23

Figure 24

Europäisches
Patentamt

European
Patent Office

Office européen
des brevets

# EUROPEAN SEARCH REPORT

Application Number

EP 20 15 9971

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 7 175 980 B2 (SRU BIOSYSTEMS INC [US]) 13 February 2007 (2007-02-13) * column 11, line 9 - column 12, line 32 * * column 18, lines 6-9 * * figure 19 * | 1,8-15 | INV. G01N21/47 G01N21/45 G01N21/77 |
| X,D | CHRISTOF FATTINGER: "Focal Molography: Coherent Microscopic Detection of Biomolecular Interaction", PHYSICAL REVIEW X, vol. 4, no. 3, 11 August 2014 (2014-08-11) , XP055490112, DOI: 10.1103/PhysRevX.4.031024 | 1,8-10, 13-15 | |
| Y | * the whole document * | 11,12 | |
| Y | WO 2014/111521 A1 (HOFFMANN LA ROCHE [CH]; HOFFMANN LA ROCHE [US]) 24 July 2014 (2014-07-24) * page 28, lines 11-26 * * page 42, lines 11-18 * * page 44, lines 17-25 * * figures 1, 18, 22 * | 11,12 | |

TECHNICAL FIELDS
SEARCHED    (IPC)

G01N

~~The present search report has been drawn up for all claims~~

| Place of search | Date of completion of the search | Examiner |
|---|---|---|
| Munich | 28 August 2020 | Hoogen, Ricarda |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

Application Number

EP 20 15 9971

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1(completely); 8-15(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

1. claims: 1(completely); 8-15(partially)

    A diffractometric sensing device for analyzing molecular interactions including a carrier medium comprising a grating structure with a plurality of consecutive surfaces having a plurality of binding sites for target molecules arranged thereon, the grating structure being configured to diffract coherent light, wherein the carrier medium is a three-dimensional transparent carrier medium that is furthermore permeable for one or more target molecules, and wherein the grating structure is configured to diffract a portion of coherent light propagating through the carrier medium.

    ---

2. claims: 2(completely); 8-15(partially)

    A diffractometric sensing device for analyzing molecular interactions including a carrier medium comprising a grating structure with a plurality of consecutive lines or surfaces having a plurality of binding sites for target molecules arranged thereon, the grating structure being configured to diffract coherent light, wherein the device further comprises a waveguide confining light in both transverse directions, with an electromagnetic field cross-section allowing for the light to interact with the grating structure so that the grating structure diffracts a portion of the coherent light propagating through the waveguide.

    ---

3. claims: 3, 4(completely); 8-15(partially)

    A diffractometric sensing device for analyzing molecular interactions including a carrier medium comprising a grating structure with a plurality of consecutive lines or surfaces having a plurality of binding sites for target molecules arranged thereon, the grating structure being configured to diffract coherent light, wherein the device further comprises a waveguide arranged on a substrate, a coherent light source, and a light detector, at least one of the light source and the light detector being integrated on said substrate, and wherein the grating structure is configured to diffract a portion of an evanescent field of coherent light propagating through the waveguide so as to produce a constructive interference signal at the light detector.

    ---

4. claim: 5

    A holographic method for lithographically creating a coherent grating structure in a carrier medium with a

page 1 of 2

32

Europäisches
Patentamt

European
Patent Office

Office européen
des brevets

**LACK OF UNITY OF INVENTION
SHEET B**

The Search Division considers that the present European patent application does not comply with the
requirements of unity of invention and relates to several inventions or groups of inventions, namely:

    plurality of consecutive lines or surfaces and a plurality
    of binding sites for target molecules arranged thereon.
                              ---

5. claims: 6, 7(completely); 8-15(partially)

    A diffractometric sensing device for analyzing molecular
    interactions including a carrier medium comprising a grating
    structure with a plurality of consecutive surfaces having a
    plurality of binding sites for target molecules arranged
    thereon, the grating structure being configured to diffract
    coherent light, wherein the grating structure is integrated
    into a microwell plate.
                              ---

**ANNEX TO THE EUROPEAN SEARCH REPORT
ON EUROPEAN PATENT APPLICATION NO.**

EP 20 15 9971

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2020

| Patent document cited in search report | | | Publication date | Patent family member(s) | | | Publication date |
|---|---|---|---|---|---|---|---|
| US 7175980 | | B2 | 13-02-2007 | US | 2003026891 | A1 | 06-02-2003 |
| | | | | US | 2007141231 | A1 | 21-06-2007 |
| WO 2014111521 | | A1 | 24-07-2014 | BR | 112015016590 | A2 | 11-07-2017 |
| | | | | CA | 2897890 | A1 | 24-07-2014 |
| | | | | CN | 104937417 | A | 23-09-2015 |
| | | | | EP | 2757374 | A1 | 23-07-2014 |
| | | | | EP | 2946210 | A1 | 25-11-2015 |
| | | | | ES | 2671951 | T3 | 11-06-2018 |
| | | | | HK | 1211698 | A1 | 27-05-2016 |
| | | | | JP | 6358476 | B2 | 18-07-2018 |
| | | | | JP | 2016505140 | A | 18-02-2016 |
| | | | | KR | 20150105473 | A | 16-09-2015 |
| | | | | PL | 2946210 | T3 | 28-09-2018 |
| | | | | RU | 2015134553 | A | 22-02-2017 |
| | | | | TR | 201806853 | T4 | 21-06-2018 |
| | | | | US | 2015338579 | A1 | 26-11-2015 |
| | | | | WO | 2014111521 | A1 | 24-07-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. FATTINGER.** *Phys. Rev.,* 2014, vol. X 4, 031024
- **V. GATTERDAM.** *Nature Nanotechnology,* 2017, vol. 12, 1089-1095
- **A. FRUTIGER et al.** Image reversal reactive immersion lithography improves the detection limit of focal molography. *Opt. Lett.,* 2018, vol. 43, 5801-5804
- **N. KRETSCHY ; A.-K. HOLIK ; V. SOMOZA ; K.-P. STENGELE ; M. M. SOMOZA.** Next-Generation o-Nitrobenzyl Photolabile Groups for Light-Directed Chemistry and Microarray Synthesis. *Angew. Chem. Int. Ed Engl.,* 2015, vol. 54, 8555-8559
- **A. FRUTIGER ; Y. BLICKENSTORFER ; S. BISCHOF ; C. FORRO ; M. LAUER ; V. GATTERDAM ; C. FATTINGER ; J. VÖRÖS.** Principles for Sensitive and Robust Biomolecular Interaction Analysis: The Limits of Detection and Resolution of Diffraction-Limited Focal Molography. *Phys. Rev. Applied,* 2019, vol. 11, 014056
- **T. SUHARA ; H. NISHIHARA.** Integrated optics components and devices using periodic structures. *IEEE J. Quantum Electron,* 1986, vol. 22, 845-867
- **S. SAKAGUCHI ; S.-I. TODOROKI ; S. SHIBATA.** Rayleigh Scattering in Silica Glasses. *J. Am. Ceram. Soc.,* 1996, vol. 79, 2821-2824